# EUROPÄISCHE PATENTSCHRIFT

(11) **EP 2 369 243 B1**
(45) Veröffentlichungstag und Bekanntmachung des Hinweises auf die Patenterteilung: **11.07.2018**
(21) Anmeldenummer: 11002499.9
(22) Anmeldetag: 25.03.2011
(51) Int. Cl.: F24D 17/00, F24D 10/00

(54) **Verfahren zum Erwärmen von Trinkwasser, Haustechniksystem,Wohnungsstation und Gebäude**
Method for heating drinking water, building technology system, domestic station and building
Procédé de chauffage d'eau potable, système de technique domestique, station d'habitation et bâtiment

(30) Priorität: 25.03.2010 DE 102010012839
(43) Veröffentlichungstag der Anmeldung: 28.09.2011
(73) Patentinhaber: Delta Systemtechnik GmbH, 29227 Celle (DE)
(72) Erfinder: Habecker, Hartmut, 31303 Burgdorf (DE); Geck, Thomas, 30559 Hannover (DE)
(74) Vertreter: Farago-Schauer, Peter Andreas

(56) Entgegenhaltungen:
- DE-A1- 3 245 416
- DE-A1- 3 919 543
- DE-A1- 4 414 861
- DE-U1- 29 520 793

## Beschreibung

Die Erfindung betriff ein Verfahren zum Erwärmen von Trinkwasser und Bereitstellen als Trinkwarmwasser, ein Haustechniksystem, eingerichtet zum Durchführen eines solchen Verfahrens, eine Wohnungsstation sowie ein Gebäude oder einen Mehrgebäudekomplex.

Trinkwasser kann in einem Gebäude je nach Ort und Jahreszeit mit einer Temperatur von meist zwischen 10 °C und 15 °C gezapft werden.

Um das kalte Trinkwasser zu Trinkwarmwasser zu erwärmen, sodass es Trinkwarmwassertemperatur hat, sind unterschiedliche Maßnahmen bekannt.

Außerdem sind im Rahmen von Gebäudetechnik zentrale Heizungsanlagen bekannt. Ausgehend von einer Zentralheizung führt ein Primärheizungsvorlauf zu den einzelnen Wohnungen. Dort wird das Heizungswasser aus dem Primärheizungsvorlauf in einer Primärheizungstemperatur genutzt, um einen Sekundärheizungsvorlauf zu speisen, also den Vorlauf durch die Heizkörper der Wohnung. Bei der Nutzung gibt das Heizungswasser Wärmeenergie ab und fließt in einer kühleren Primärheizungsrücklauftemperatur über den Primärheizungsrücklauf zurück zur Zentralheizung.

Beispielsweise ist aus der DE 32 45 416 A1 ein Energietauschersystem zum Versorgen mehrerer Wohneinheiten, Reihenhäuser oder dergleichen mit zentral bereitgestellter Wärmeenergie bekannt, wobei das Energietauschersystem zumindest eine Energietauscher-Station aufweist, welche einer Wohneinheit, einem Reihenhaus oder dergleichen zugeordnet ist. Ein Verfahren gemäß dem Oberbegriff des Anspruchs 1 und ein System gemäß dem Oberbegriff des Anspruchs 14 ist aus der Patentschrift DE3245416 A1 bekannt.

Ferner offenbart die DE 39 19 543 A1 eine Duscheinrichtung mit einem Wärmetauscher und mit einem elektrischen Durchlauferhitzer, bei welcher mittels des Wärmetauschers das aus der Duschwanne abfließende Duschwasser das Frischwasser vorerwärmt wird, welches dem elektrischen Durchlauferhitzer zugeführt wird. Hierbei erfasst ein Temperaturfühler die jeweilige Ist-Temperatur des durch den Wärmetauscher vorerwärmten Frischwassers, wobei sich die jeweilige momentane elektrische Leistung des Durchlauferhitzers entsprechend der Temperaturdifferenz zwischen der Ist-Temperatur und einer an einem Sollwertsteller gewählten Duschwasser-Soll-Temperatur und entsprechend der Frischwasserdurchschlussmenge einstellt.

Darüber hinaus beschreibt die DE 44 14 861 A1 ein System zur Versorgung einzelner Wohnungen in einem Wohnhaus mit Warmwasser und Heizenergie, wobei das System eine Steigleitung für Kaltwasser umfasst, welche von Abzweigleitungen zu den einzelnen Wohneinheiten führen, und wobei das System eine Versorgungsleitung umfasst, die an eine Fernwärme-Versorgungsleitung eines Versorgungsunternehmens angeschlossen ist.

In der DE 295 20 793 U1 ist eine Einrichtung zur Versorgung einer abgeschlossenen Gebäudeeinheiten mit Wärme zur Brauchwassererwärmung und einer Heizung beschrieben, bei der eine zentrale Zuführung von Wärme und Kaltwasser vorgenommen wird und bei der eine ganzheitliche kontinuierliche Wärmemengenermittlung erfolgt, die jeweils in einer wärmeübertragenden Einrichtung einen ersten Sekundärraum zur Erwärmung eines sekundären Heizungskreislaufs und einen zweiten Sekundärraum zur Brauchwassererwärmung aufweist.

Der vorliegenden Erfindung liegt die Aufgabe zu Grunde, ein sehr effektives System zum Erwärmen von Trinkwasser zu entwickeln. Das oben beschriebene Problem wird durch die Erfindung gemäß den unabhängigen Ansprüchen 1 und 13 gelöst.

Nach einem ersten Aspekt der Erfindung löst diese Aufgabe ein Verfahren zum Erwärmen von Trinkwasser und Bereitstellen als Trinkwarmwasser mit einer Trinkwarmwassertemperatur in einer Wohnung, unter Nutzung eines Primärheizungsvorlaufs und eines Primärheizungsrücklaufs wobei Heizungswasser von einer Zentralheizung über den Primärheizungsvorlauf in einer Primärheizungsvorlauftemperatur zur Wohnung gefördert wird und nach Nutzung in einer kühleren Primärheizungsrücklauftemperatur über den Primärheizungsrücklauf zur Zentralheizung zurückgefördert wird, wobei die Nutzung des Heizungswasser und das Erwärmen des Trinkwassers in einer Wohnungsstation erfolgen, wobei in der Wohnungsstation zwei sich ergänzende Erwärmungsstufen unterschiedlichen Prinzips zum Erwärmen des Trinkwassers vorgesehen sind, nämlich eine mittels eines Wasser-Wasser-Wärmetauschers und eine mittels eines elektrischen Nachheizers.

Begriff sei zunächst erläutert, dass im Rahmen der hier vorliegenden Erfindung eine "Wohnung" nicht zwingend eine solche Gebäudeeinheit sein muss, welche tatsächlich zum Wohnen durch einen oder mehrere Menschen verwendet wird. Vielmehr sei als eine Wohnung eine Gebäudeeinheit verstanden, welche sich gegenüber einer zentralen Gebäudestruktur individuell abgrenzt. Es kann sich also um eine Wohnung handeln, aber genau so gut um ein Büro oder ein Ladengeschäft oder sogar um ein eigenständiges Gebäude, welches mit anderen Gebäudeteilen zu einem Mehrgebäudekomplex hinsichtlich der Haustechnik zusammengeschlossen ist.

Der Einfachheit halber wird im Rahmen der vorliegenden Beschreibung und Patentansprüche durchgehend von einer "Wohnung" gesprochen, ohne die übrigen Varianten jeweils mit aufzuzählen.

Als eine "Wohnungsstation" wird ein im Zusammenhang miteinander stehender Haustechnikinstallationsbereich bezeichnet, beispielsweise an einer hierfür vorgesehenen Stelle zum Zusammenführen der Installationen innerhalb einer Wohnung mit der Installation außerhalb der Wohnung zur Zentralheizung.

Bei mehreren Wohnungen werden in der Regel mehrere Wohnungsstationen vorhanden sein, nämlich pro Wohnung im Normalfall genau eine.

Der Erfinder hat erkannt, dass es bei einem Verfahren wie im ersten Aspekt der Erfindung vorgeschlagen, zu einem sehr effizienten Nutzen von Energie kommen kann. Aus variablen Bedingungen, beispielsweise aus gleitenden Heizungsvorlauftemperaturen, kann wegen des elektrischen Nachheizers immer zuverlässig die gewünschte Trinkwarmwassertemperatur bereitgestellt werden.

Auch kann mittels der elektrischen Nachheizung, vor allem bei einer Steuerung oder Regelung, wobei der Einfachheit halber im Rahmen der hier vorliegenden Anmeldung immer nur von einer "Steuerung" gesprochen wird, aber darunter beides verstanden werden soll, die möglicherweise ansonsten fehlende Energie bei zu geringen Heizungsvorlauftemperaturen vor allem in der Übergangszeit oder im Sommer beigesteuert werden.

Um das Trinkwasser auf Trinkwarmwassertemperatur zu erwärmen, ist es denkbar, dass als erste Erwärmungsstufe das Trinkwasser im Wasser-Wasser-Wärmetauscher teilerwärmt und als zweite Erwärmungsstufe sanitärseitig des Wasser-Wasser-Wärmetauschers das teilerwärmte Trinkwasser mittels des elektrischen Nachheizers auf Trinkwarmwassertemperatur resterwärmt wird.

Als "sanitärseitig" sei ein Teil der Haustechnikinstallation zu verstehen, welcher vom Wasser-Wasser-Wärmetauscher hin zur Wohnung gerichtet ist, also auf der anderen Seite von der Zentralheizung.

Alternativ ist es zum Erwärmen des Trinkwassers möglich, als erste Erwärmungsstufe vom Primärheizungsvorlauf stammendes Heizungswasser mittels des elektrischen Nachheizers nachzuheizen und als zweite Erwärmungsstufe sanitärseitig des elektrischen Nachheizers das Trinkwasser im Wasser-Wasser-Wärmetauscher mittels des nachgeheizten Heizungswassers auf Trinkwarmwassertemperatur zu erwärmen.

Weiter alternativ ist denkbar, das Trinkwasser zu erwärmen, indem als erste Erwärmungsstufe vom Primärheizungsvorlauf stammendes Heizungswasser mittels des elektrischen Nachheizers nachgeheizt wird, dann als zweite Erwärmungsstufe das Trinkwasser sanitärseitig des elektrischen Nachheizers im Wasser-Wasser-Wärmetauscher mittels des nachgeheizten Heizungswassers teilerwärmt wird und als dritte Erwärmungsstufe das teilerwärmte Trinkwasser sanitärseitig des Wasser-Wasser-Wärmetauschers mittels eines weiteren elektrischen Nachheizers auf Trinkwassertemperatur resterwärmt wird.

Ausdrücklich sei betont, dass im Rahmen der hier vorliegenden Anmeldung unbestimmte Zahlenangaben als "mindestens"-Angaben zu verstehen sind, sofern sich nicht im Einzelfall ergibt, dass "genau" diese Zahl gemeint ist. "Genau" die genannte Anzahl ist allerdings jeweils als eine bevorzugte Ausführung zu verstehen.

Beispielhaft hierfür fällt unter die im Hauptanspruch geforderte Anzahl zweier Erwärmungsstufen auch die hier nun vorgestellte Variante mit drei Erwärmungsstufen.

Die vorstehenden beispielhaften Ausführungsvarianten des ersten Erfindungsaspekts ermöglichen allesamt eine optimierte Energiezuführung von der Heizungsseite, um möglichst kalte Heizungsrücklauftemperaturen zu erzielen. Dies ist nicht nur deshalb von Vorteil, weil dann im Heizungsrücklauf wenig Wärmeenergie ungezielt abgegeben wird. Auch eine etwa vorhandene Wärmepumpe funktioniert besonders gut, wenn die Temperatur im Heizungsrücklauf möglichst niedrig ist.

Gleichzeitig kann die Energiezuführung von der Elektroseite zur Nachheizung optimiert werden, um möglichst nur diejenige Menge an Energie elektrisch nachzuheizen, welche wirklich benötigt wird, um die gewünschte Trinkwarmwassertemperatur zu erreichen.

In Folge dessen, dass ein elektrischer Nachheizer vorhanden ist, kann Energie zur Warmwasserbereitung ohne Vorlaufzeit zur Verfügung gestellt werden.

Bei sämtlichen vorgenannten Ausführungsvarianten und bei weiteren nicht ausdrücklich genannten Ausführungsvarianten der Erfindung gemäß dem Hauptanspruch kann Warmabwasser durch einen Rückgewinnungs-Wärmetauscher geführt werden, um Wärmeenergie aus dem Warmabwasser rückzugewinnen und mit der rückgewonnenen Wärmeenergie zum Erwärmen des Trinkwassers beizutragen, wobei das Warmabwasser insbesondere durch den genannten Wasser-Wasser-Wärmetauscher in der Wohnungsstation geführt werden kann.

Bei einer solchen Ausgestaltung des Verfahrens bzw. eines damit korrespondierenden Hautechniksystems wird die ansonsten ungenutzt abfließende Wärme zumindest zum Teil rückgewonnen und nochmals genutzt. Ein solches Verfahren ist vor allem dann sinnvoll anwendbar, wenn Warmabwasser aus einem Duschenabschluss oder einem Waschbeckenabfluss verwendet wird. Alternativ oder kumulativ können Waschmaschinen, Waschtrockner, Wasserabläufe von sich unter Sonneneinstrahlung aufheizenden Dächern oder Spülmaschinen usw. jeweils warmes Abwasser zur Wärmerückgewinnung bereitstellen.

Die Primärheizungsvorlauftemperatur kann bevorzugt zwischen etwa 38 °C und maximal etwa 60 °C gehalten werden, insbesondere konstant. Besonders gut kann das System allerdings mit gleitenden Primärheizungsvorlauftemperaturen umgehen. Diese können auch vor allem innerhalb des genannten Temperaturspektrums liegen.

Die Primärheizungsrücklauftemperatur liegt bevorzugt so niedrig wie möglich, vor allem zwischen 20 °C und 45 °C, insbesondere zwischen etwa 25 °C und etwa 35 °C, wobei die Primärheizungsrücklauftemperatur variabel sein kann. Das vorgeschlagene Verfahren und das damit korrespondierende Haustechniksystem sind so flexibel, dass sie ohne Weiteres mit einer variablen Primärheizungsrücklauftemperatur umgehen können. Es macht daher wenig Sinn, ein übermäßiges aufwendiges Regelsystem einzusetzen, um eine möglichst gleichmäßige Primärheizungsrücklauftemperatur zu erreichen.

Es wird vorgeschlagen, dass während des Durchführens des vorstehend beschriebenen Verfahrens eine Verbrauchs- und Zustandsgrößenerfassung durchgeführt wird, wobei ermittelte Verbrauchs- und Zustandsgrößen von der Wohnungsstation an eine Steuerung für die Zentralheizung übermittelt werden.

Mit einer solchen Rückkopplung kann die Steuerung der Zentralheizung alle Werte so anpassen, wie sie sich aus den ermittelten Verbrauchs- und Zustandsgrößen am besten errechnen. Die Steuerung kann sich selbst zu einem Idealwert iterieren, weil sie die eingestellten Soll-Werte durch gemessene Ist-Werte abgleichen kann.

Außerdem lassen sich Trinkwarmwasser, Trinkaltwasser und Heizungsverbrauch einfach in einer zentralen Steuerung erfassen. Dies erleichtert die Abrechnung mit den Inhabern der einzelnen Wohnungsstationen.

Die dezentralen Stationen können mit der Heizzentrale mittels eines Datenaustauschers hinsichtlich der Verbräuche von Trinkwarmwasser, Trinkwasser, Heizungsvorlauftemperatur, Heizungsrücklauftemperatur, elektrische Nachheizung, Volumenströme usw. verknüpft sein.

Recht leicht lässt sich aus diesen Werten auch der Endenergieverbrauch für jede einzelne Wohnung ermitteln.

Insgesamt ermöglicht die Netzverbindung zur zentralen Heizungsanlage ein sich selbst adaptierendes Gebäude. Die Steuerungstechnik kann intelligent programmiert sein, so dass sie bei bestimmten gegebenen Konditionen vor allem hinsichtlich der Außentemperatur und der Jahreszeit hinzulernen kann. Außerdem kann die Steuerung bevorzugt auf Energiepreise zugreifen, beispielsweise für Öl- oder Gaspreise sowie beispielsweise für die aktuellen Einspeiseertragspreise für aus Solarzellen gewonnenem Strom ins Stromnetz.

Die Steuerung kann entscheiden, wie sie lokal regenerativ gewonnenen Strom oder lokal regenerativ gewonnenes Heißwasser erzeugt oder zuführt. Regenerative Technologien werden auf diese Weise in einer bislang nicht bekannten vorteilhaften Weise kombiniert.

Zu dem elektrischen Nachheizer kann modular ein weiterer Nachheizer in die Wohnungsstation geschaltet werden. Auf diese Weise können unterschiedliche Leistungsklassen für die Warmwasserbereitung modular erzeugt werden.

Wenn ein Stellmotor vor einem Regler eingesetzt wird, kann sehr gut auf einen hydraulischen Abgleich Einfluss genommen werden. Dies ermöglicht es, nur eine maximal vorgesehene Energiemenge in die Wohnung einspeisen zu lassen. Selbst wenn - wie im Falle von Privatwohnungen oft der Fall - ein Bewohner einen technisch Zuständigen, beispielsweise den Hausmeister, bittet, die Menge zu erhöhen, kann sich dieser nicht über die elektronische Regelung hinwegsetzen.

Dies gilt auch dann, wenn der Solarstromanteil ohnehin erhöht ist und ausreichend Energie zur Verfügung steht. Weil der Heizungsvorlauf in Folge der mehrstufigen Erwärmung des Trinkwassers niedrig sein kann, zum Beispiel mit 45 °C, kann ein recht hoher Solarstromanteil benutzt werden. Beispielsweise können von einem Solarkollektor recht regelmäßig Temperaturen um die 40 °C bereitgestellt werden.

Alternativ oder kumulativ zum vorstehend beschriebenen ersten Aspekt der Erfindung löst die gestellte Aufgabe gemäß einem zweiten Aspekt der Erfindung ein Verfahren zum Erwärmen von Trinkwasser und Bereitstellen als Trinkwarmwasser mit einer Trinkwarmwassertemperatur in einer Wohnung, wobei Warmabwasser unterhalb einer Zapfstelle für Trinkwarmwasser aufgenommen und abgeführt wird, wobei zwei sich ergänzende Erwärmungsstufen unterschiedlichen Prinzips zum Erwärmen des Trinkwasser vorgesehen sind, nämlich eine mittels eines Rückgewinnungs-Wärmetauschers und eine mittels eines elektrischen Nachheizers, wobei als erste Erwärmungsstufe das abgeführte Warmabwasser zur Nutzung durch den Rückgewinnungs-Wärmetauscher geführt wird, um Wärmeenergie aus dem Warmabwasser rückzugewinnen und mit der rückgewonnenen Wärmeenergie das Trinkwarmwasser teilzuerwärmen, woraufhin als zweite Erwärmungsstufe sanitärseitig des Rückgewinnungs-Wärmetauschers das teilerwärmte Trinkwasser mittels des elektrischen Nachheizers auf Trinkwarmwassertemperatur resterwärmt wird.

Begrifflich sei hinsichtlich dieses Aspekts erläutert, dass hier anstelle des Heizungswassers oder zusätzlich zum Heizungswasser als Energiequelle aufgefangenes Warmabwasser unterhalb einer Zapfstelle verwendet wird, also beispielsweise Duschabwasser.

Bevorzugt werden beide Erwärmungsstufen in einer Wohnungsstation durchgeführt.

In einer bevorzugten Ausführungsvariante wird das Warmabwasser durch den im Rahmen des ersten Aspekts der Erfindung bereits beschriebenen Wasser-Wasser-Wärmetauschers in der Wohnungsstation geführt.

Es wird dann vorgeschlagen, dass das Warmabwasser einen Vorzug gegenüber anderweitiger Durchströmung erhält. Warmabwasser fällt nicht immer an. Wann immer es anfällt, kann der Zustrom von Heizungswasser daher reduziert oder gestoppt werden, so lange sich aus dem abgeführten Warmabwasser Energie rückgewinnen lässt.

Nach einem dritten Aspekt der Erfindung löst die gestellte Aufgabe ein Haustechniksystem, welches eingerichtet ist zum Durchführen eines vorstehend beschriebenen Verfahrens oder mehrerer der vorstehenden Verfahren und weiterer - mitunter auch einstufiger - Erwärmungsverfahren, wobei die Wohnungsstation wohnungsseitig oder heizungsseitig einer Übergabestelle in die Wohnung angeordnet sein kann.

In beiden Fällen kann die Wohnungsstation sehr kompakt ausgeführt werden und beispielsweise in einem bauseits vorhandenen Schacht untergebracht werden.

Die Wohnungsstation kann von einem Gehäuse umgeben sein. Dies ist die bevorzugte Aufbauform. In diesem Fall können die Anschlüsse sehr gut gekennzeichnet sein, und das gesamte System kann auf sehr kompakte Weise eingebaut und gewartet werden.

An der Wohnungsstation kann eine Anschlussmöglichkeit für einen Sekundärheizkreis vorgesehen sein, insbesondere durch die Wohnung führend.

Es wird vorgeschlagen, dass eine lernfähige Steuerung im Haustechniksystem vorgesehen ist, bevorzugt ebenfalls innerhalb des Gehäuses.

Bei einem Haustechniksystem mit mehreren Wohnungen wird vorgeschlagen, dass eine Mehrzahl dezentraler Wohnungsstationen vorgesehen ist, bevorzugt jeweils eine Wohnungsstation pro Wohnung.

Gemäß einem vierten Aspekt der Erfindung löst die gestellte Aufgabe eine Wohnungsstation mit einem Gehäuse, einem Wasser-Wasser-Wärmetauscher, einem elektrischen Nachheizer, einem Regler und mit Anschlüssen, so dass das vorstehend beschriebene Haustechniksystem errichtet werden kann.

Gemäß einem fünften Aspekt der Erfindung löst die gestellte Aufgabe ein Wohn-, Büro- und/oder Geschäftsgebäude oder Mehrgebäudekomplex mit einem vorstehend beschrieben Haustechniksystem und/oder mit einer Mehrzahl an Wohnungsstationen wie vorstehend beschrieben, wobei die Wohnungen entweder einheitlich oder nicht-einheitlich als privat bewohnte Wohnungen, als Büros oder als Ladengeschäfte eingerichtet sein können.

Schließlich wird vorgeschlagen, ein Wohn-, Büro- und/oder Geschäftsgebäude oder einen Gebäudekomplex mit einem Haustechniksystem wie vorstehend beschrieben nachzurüsten, wobei eine bauseits vorhandene Zirkulationsleitung verwendet und zum Nachrüsten umfunktioniert wird.

Die Erfindung wird nachstehend anhand einiger Ausführungsbeispiele unter Bezugnahme auf die Zeichnung näher erläutert. Dort zeigen
- Figur 1: eine Tabelle mit beispielhaften Werten,
- Figur 2: schematisch eine Wohnungsstation in einer ersten Variante,
- Figur 3: schematisch eine Wohnungsstation in einer zweiten Variante,
- Figur 4: schematisch eine Wohnungsstation in einer dritten Variante,
- Figur 5: schematisch eine Wohnungsstation in einer vierten Variante und
- Figur 6 a, 6 b: schematisch eine Wohnungsstation in einer fünften Variante mit einer kleinen Abwandlung.

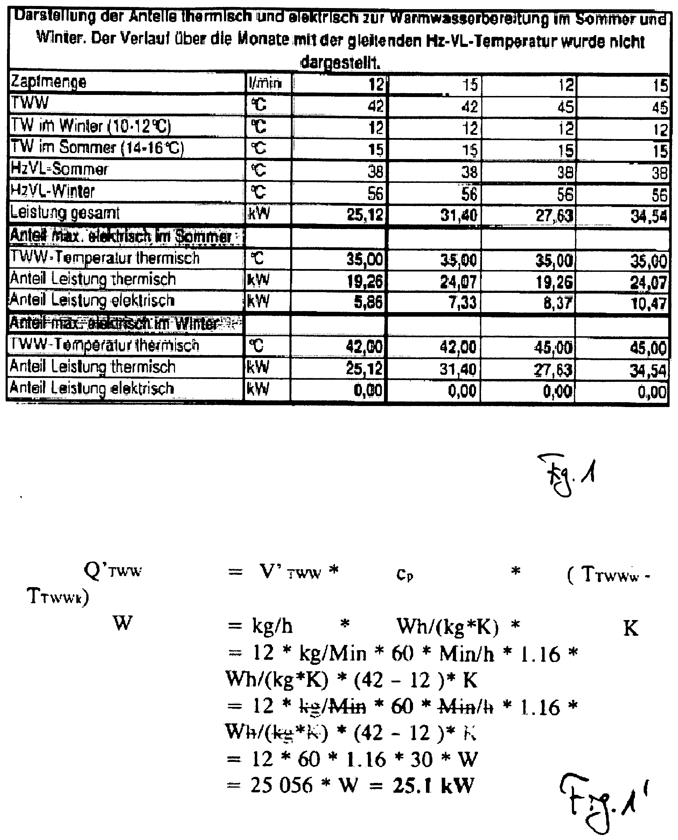

Die Tabelle in Figur 1 stellt die Anteile thermischer und elektrischer Anteile dar, welche zur Trinkwarmwasserbereitung im Sommer und im Winter verwendet werden können. Ein Verlauf über die Monate mit der gleitenden Heizungsvorlauftemperatur wurde nicht berücksichtigt, um die Darstellung einfacher zu gestalten.

Die erste Spalte beschreibt den Zeileninhalt. Die zweite Spalte beschreibt die Einheiten.

In der 3. und 5. Spalte ist jeweils eine geringe Zapfmenge angefordert, nämlich beispielsweise 12 l/min. In der 4. und 6. Spalte hingegen ist eine höhere Zapfmenge angefordert, nämlich 15 l/min.

In der 3. und 4. Spalte soll das Trinkwarmwasser auf 42 °C erhitzt werden, in der 5. und 6. Spalte hingegen auf 45 °C.

Der Heizungsvorlauf im Sommer wurde jeweils mit 38 °C angenommen, der Heizungsvorlauf im Winter mit 56 °C.

Rechnerisch ergibt sich bei der Erfindung, dass im Winter nicht elektrisch nachgeheizt werden muss, weil der Primärheizungsvorlauf mit 56 °C im Winter recht warm eingestellt ist. Dies gilt sogar, obwohl eine recht hohe Trinkwarmwassertemperatur verlangt wird.

Im Sommer hingegen wird die recht niedrige Trinkwarmwassertemperatur von 35 °C mit der zweistufigen Erwärmung erreicht. Es wird elektrisch nachgeheizt.

Das Haustechniksystem ist sowohl zum Trinkwassererwärmen mit einer Stufe als auch zum Trinkwassererwärmen mit zwei Stufen eingerichtet. Die Regelung schaltet die Erwärmungsstufen je nach Bedarf.

Die unterste angestrebte Puffertemperatur sollte zwischen 20 °C und 35 °C liegen. Dieser Wert ist zuverlässig normalerweise nur im Sommer zu erreichen. Mit steigender Heizlastanforderung ist die Rücklauftemperatur maßgeblich von der Auslegung der Heizflächen abhängig. Viel mehr, der hydraulische Abgleich ist optimal durchführbar und über die Hybrid-Wohnungsstation zu überwachen und gegebenenfalls über einen Stellantrieb zu schließen.

Eine möglichst gute Wärmedämmung der Vorlaufleitung sollte vorgesehen sein, um eine unerwünschte Auskühlung zu verhindern.

Ein beispielhafter Berechnungsweg zum Ermitteln der Tabelle in Figur 1 wird als Figur 1' beigefügt.

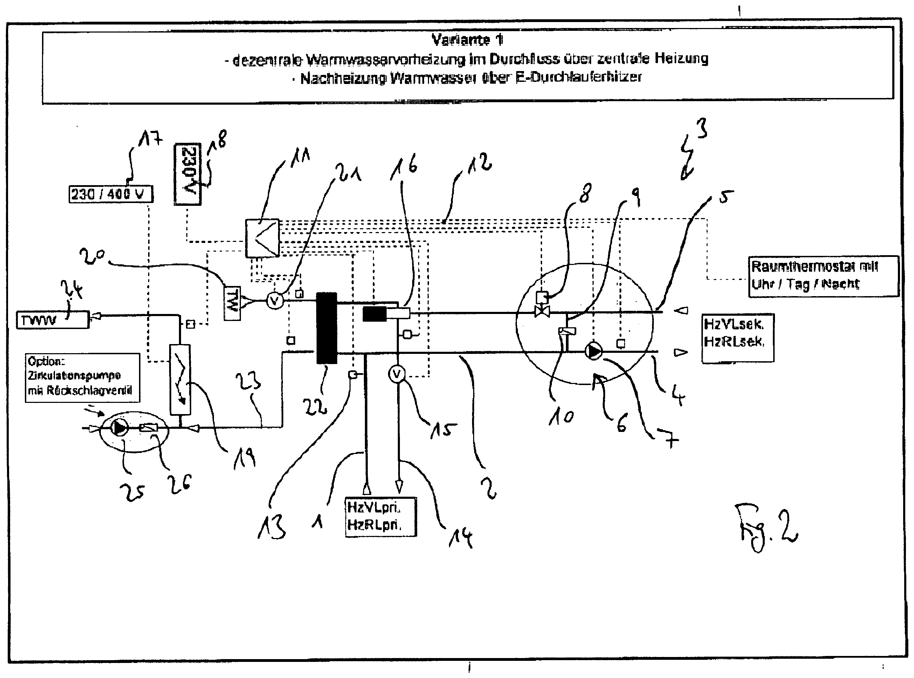

Bei der in Figur 2 schematisch dargestellten Wohnungsstation ist in einem Gehäuse (nicht dargestellt) eine Mehrzahl Anschlüsse vorhanden.

Ein Primärheizungsvorlauf 1 führt zu einer Verteilerleitung 2 innerhalb der Wohnungsstation 3. Diese führt einerseits zu einem Sekundärheizungsvorlauf 4, welcher über einen Sekundärheizungsrücklauf 5 wieder benutztes Heizungswasser in die Wohnungsstation 3 einspeisen kann.

Der sekundäre Heizkreis ist optional anschließbar. Er ist als ein Einspritzkreis 6 ausgeführt und weist eine Pumpe 7, ein Zwei-Wege-Ventil 8 und einen Bypass 9 mit Rückschlagventil 10 auf.

An einen elektrischen Regler 11 sind alle regelbaren Komponenten der Wohnungsstation 3 und alle Sensoren über elektrische Kabel 12 (exemplarisch gekennzeichnet) angeschlossen.

Unter anderem im Zulauf vom Primärheizungsvorlauf 1 zur Wohnungsstation 3 sind Temperaturfühler 13 (exemplarisch gekennzeichnet) angeordnet.

Im Primärheizungsrücklauf 14 ist ein Volumenstromzähler 15 angeordnet.

Der Zustrom zum Primärheizungsrücklauf 14 wird von einem Drei-Wege-Ventil 16 bestimmt.

Eine Spannungsquelle (17, 18) ist einerseits an den Regler 11 angeschlossen, andererseits an einen elektrischen Durchlauferhitzer 19.

Eine Trinkwasserquelle 20 führt entlang eines Volumenstromzählers oder Strömungsschalters 21 zu einem Wärmetauscher 22.

Von dort aus führt eine Leitung 23 für teilerwärmtes Trinkwasser durch den elektrischen Durchlauferhitzer 19 hindurch zu einer Trinkwarmwasser-Zapfstelle 24.

Optional ist eine Zirkulationspumpe 25 mit einem Rückschlagventil 26 angeschlossen.

Im Betrieb der Wohnungsstation 3 wird eine dezentrale Warmwasservorheizung im Durchfluss über die zentrale Heizung und das vom Primärheizungsvorlauf 1 stammende Heizungswasser im Wasser-Wasser-Wärmetauscher 22 erreicht. Das hierdurch benutzte und abgekühlte Heizungswasser fließt anschließend - geregelt durch das Drei-Wege-Ventil 16 - zurück zum Primärheizungsrücklauf 14.

Hierzu wird bei angeschlossenem Sekundärheizkreis das Wasser vom Sekundärheizungsrücklauf 5 gespeist.

Das kalte Trinkwasser von der Trinkwasserquelle 20 wird im Wasser-Wasser-Wärmetauscher 22 somit teilerwärmt und wird anschließend durch die Leitung 23 für das teilerwärmte Trinkwasser durch den elektrischen Durchlauferhitzer 19 geführt. Dort kann es elektrisch resterwärmt werden und sodann an der Zapfstelle 24 für Trinkwarmwasser in der gewünschten Temperatur entnommen werden.

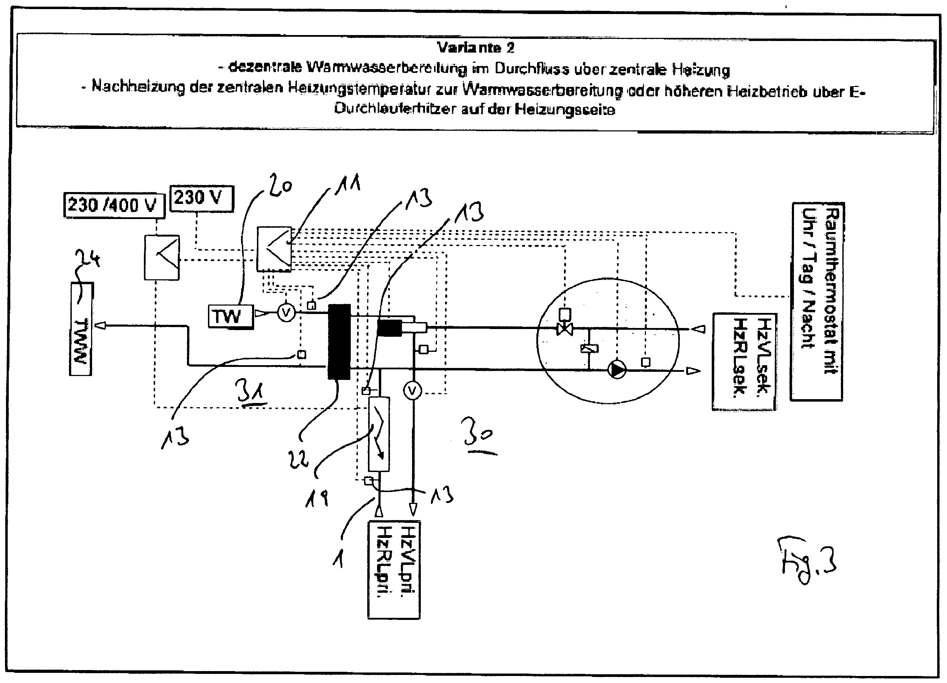

Bei der in Figur 3 dargestellten zweiten Variante findet eine dezentrale Warmwasserbereitung im Durchfluss über die zentrale Heizung statt. Eine Nachheizung der zentralen Heizungstemperatur zur Warmwasserbereitung oder zum höheren Heizbetrieb findet über einen elektrischen Durchlauferhitzer 19 auf der Heizungsseite 30 des Wasser-Wasser-Wärmetauschers 22 statt. Auf einer Wohnungsseite 31 des Wasser-Wasser-Wärmetauschers 22 wird bei der zweiten Ausführungsvariante nicht mehr elektrisch nachgeheizt. Vielmehr wird das Heizungswasser im Primärheizungsvorlauf 1 durch den dort angeordneten elektrischen Durchlauferhitzer 19, der dann als elektrischer Nachheizer fungiert, auf eine so hohe Temperatur gebracht, dass die Wärmeübergangsleistung im Wasser-Wasser-Wärmetauscher 22 bereits ausreicht, um das kalte Trinkwasser von der Trinkwasserquelle 20 ohne weiteres elektrisches Nachheizen zur gewünschten Temperatur an der Zapfstelle 24 für Trinkwarmwasser zu erwärmen.

Die Temperaturerhöhung im Primärheizungsvorlauf 1 wird mit zwei Temperaturfühlern 13 (in allen Figuren nur exemplarisch beziffert) nachvollzogen. Bei Bedarf wird der elektrische Durchlauferhitzer 19 höher oder niedriger geregelt.

Der Regler 11 kennt die Temperatur des Trinkwassers außerdem über dort angeordnete Temperaturfühler 13 sowohl vor dem Wasser-Wasser-Wärmetauscher 22 als auch danach, also im direkten Zulauf zur Zapfstelle 24.

Der Durchlauferhitzer 19 kann ebenso zum Erreichen einer höheren Sekundärvorlauftemperatur in der Wohnung eingesetzt werden, wenn dort höhere Raumtemperaturen erreicht werden sollen als mit der vorgegebenen Primärvorlauftemperatur erreichbar wären.

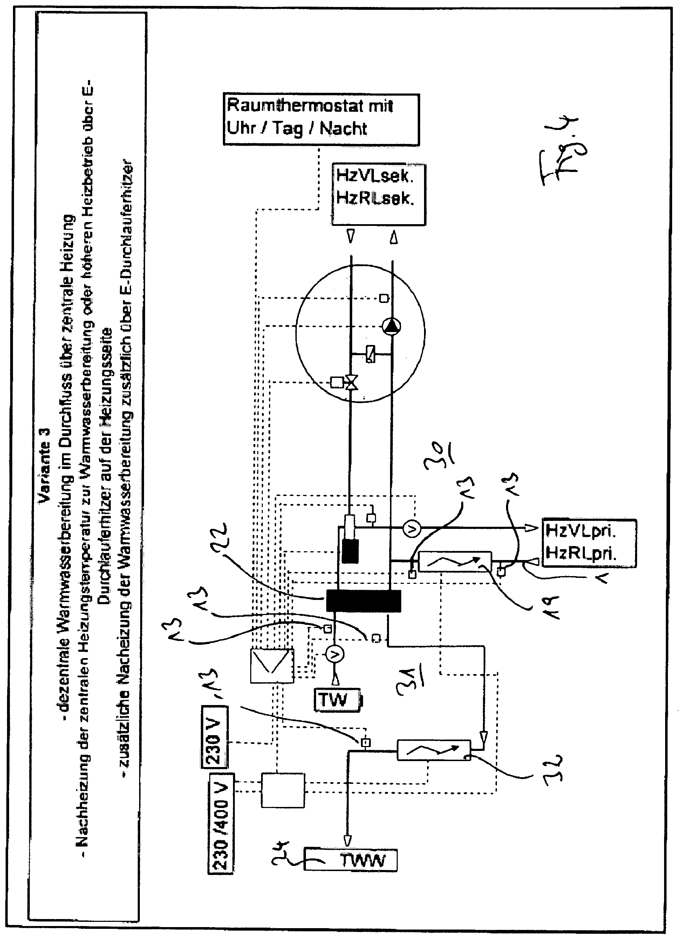

Die in Figur 4 dargestellte dritte Variante der Wohnungsstation bewirkt ebenfalls eine dezentrale Warmwasserbereitung im Durchfluss über eine zentrale Heizung. Die Nachheizung der zentralen Heizungstemperatur zur Warmwasserbereitung oder zum höheren Heizbetrieb erfolgt über einen elektrischen Durchlauferhitzer 19 auf der Heizungsseite 30. Zusätzlich wird auf der Wohnungsseite 31 mit einem ergänzenden elektrischen Durchlauferhitzer 32 das teilerwärmte Trinkwasser auf dem Weg vom Wasser-Wasser-Wärmetauscher 22 zur Zapfstelle 24 für Trinkwarmwasser noch resterwärmt.

Auch hier werden die Temperaturen im Primärleitungsvorlauf 1 vor und nach dem ersten elektrischen Durchlauferhitzer 19 sowie die Temperaturen im Trinkwasser vor dem Wasser-Wasser-Wärmetauscher 22, nach dem Wasser-Wasser-Wärmetauscher 22 und nach dem zusätzlichen, ergänzenden Durchlauferhitzer 32 gemessen, also auf dem Weg direkt zur Zapfstelle 24.

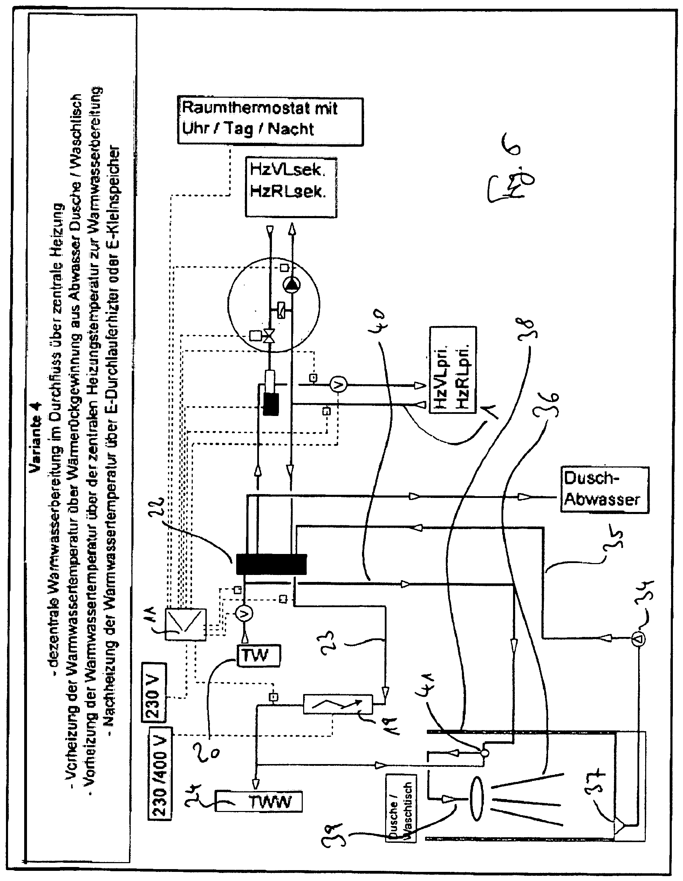

Die vierte Variante der Wohnungsstation in Figur 5 bewirkt ebenfalls eine dezentrale Warmwasserbereitung im Durchfluss über eine zentrale Heizung. Eine Vorheizung der Warmwassertemperatur erfolgt über Wärmerückgewinnung aus Abwasser von einer Dusche oder beispielsweise einem Waschtisch. Außerdem erfolgt eine Vorheizung der Warmwassertemperatur über die zentrale Heizungstemperatur. Schließlich wird elektrisch über einen Durchlauferhitzer oder einen Elektrokleinspeicher die Warmwassertemperatur nachgeheizt.

Im ersten Erwärmungsschritt wird das von der Trinkwasserquelle 20 stammende kalte Trinkwasser im Wasser-Wasser-Wärmetauscher 22 teilerwärmt. Der Wasser-Wasser-Wärmetauscher 22 wird einerseits vom Primärheizungsvorlauf 1 gespeist, andererseits über eine Rückgewinnungspumpe 34 und eine Rückführleitung 35 zusätzlich von bereits gezapftem Warmabwasser 36, welches an einer Sammelstelle 37 an einer Dusche oder einem Waschtisch 38 unterhalb einer Rückgewinnungszapfstelle 39 aufgenommen wird.

Wann immer die Rückgewinnungspumpe 34 Warmabwasser 36 über die Rückgewinnungsleitung 35 am Wasser-Wasser-Wärmetauscher zur Verfügung stellen kann, lässt der Regler 11 bevorzugt das Warmabwasser 36 durch den Wasser-Wasser-Wärmetauscher 22.

In der Leitung 23 für teilerwärmtes Trinkwasser wird dieses sodann durch den elektrischen Durchlauferhitzer 19 oder eine dort vorgesehene Anlage für einen elektrischen Kleinspeicher zur Zapfstelle 24 für Trinkwarmwasser und/oder zur Rückgewinnungszapfstelle 39 geführt.

Über eine Beimischleitung 40 kann kaltes Trinkwasser kurz vor einer Rückgewinnungszapfstelle 39 beigemischt werden, wenn dies gewünscht ist. Dies wird beispielsweise bei Duschen oder Waschtischen mittels einer dortigen Armatur 41 der Fall sein.

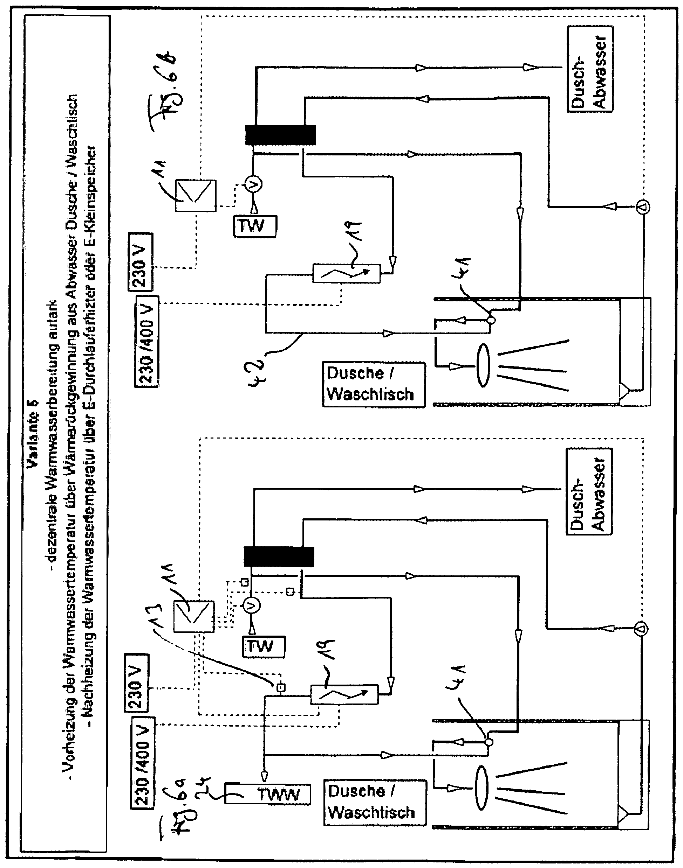

Bei der fünften Variante einer Wohnungsstation in den Figuren 6a und 6b erfolgt eine dezentrale Warmwasserbereitung autark. Eine Vorheizung der Warmwassertemperatur erfolgt über eine Wärmerückgewinnung aus Warmabwasser von einer Dusche oder beispielsweise einem Waschtisch. Eine Nachheizung der Warmwassertemperatur erfolgt über einen elektrischen Durchlauferhitzer oder einen elektrischen Kleinspeicher.

Wenn vom elektrischen Durchlauferhitzer 19 oder dem dortigen Kleinspeicher Wasser ohne eine vorherige Armatur 41 zur Zapfstelle 24 für Trinkwarmwasser geleitet wird, sind relativ viele Temperatursensoren 13 vorhanden, insbesondere auf direktem Weg vom Durchlauferhitzer 19 zur Zapfstelle 24 für Trinkwarmwasser.

Sofern - wie in Figur 6b dargestellt - das resterwärmte Trinkwasser 42 nach dem elektrischen Durchlauferhitzer 19 noch durch eine Armatur 41 geführt wird, kann auf diese Temperaturfühler verzichtet werden.

Ein elektrisch geregelter Wärmetauscher - oder generell der Nacherhitzer - kann außerdem gleich gezielt auf die gewünschte Temperatur heizen.

Es kann sogar auf eine Regelung des Durchlauferhitzers 19 oder des dortigen Kleinspeichers durch den Regler 11 verzichtet werden.

Übergreifend über die Beispiele lässt sich mit anderen Worten Folgendes erläutern:

Das Trinkkaltwasser wird bei den Varianten 1 bis 4 vorgewärmt oder auf die entsprechende Warmwassertemperatur direkt erwärmt.

Wenn die von der Heizzentrale zur Verfügung gestellte Heiztemperatur nicht ausreicht, wird entweder das Heizungswasser in der dezentralen Wohnungsstation über einen elektrischen Durchlauferhitzer auf der Heizungsseite auf die erforderliche Temperatur erhöht, um dann die gewünschte Warmwassertemperatur zu erreichen, oder es wird nur so viel übertragen, dass der Rest an benötigter Energie von dem elektrischen Durchlauferhitzer auf der Sanitärseite nachgeheizt wird, oder es kann sein, dass - wie beispielsweise in Variante 4 - das Abwasser von Dusche, Waschtisch oder ähnlichem vorgewärmt wird, geregelt wird und nachgeheizt wird über die zentrale Heizungsanlage, und nur noch der verbleibende Rest über den sanitärseitigen elektrischen Durchlauferhitzer.

Das Abwasser sollte bei einer solchen Konstellation immer Vorrang haben, weil möglichst viel Wärme zurück gewonnen werden sollte.

Erst dann wird die Heizung zum Nachheizen verwendet.

Schließlich wird der elektrische Durchlauferhitzer eingesetzt.

Wenn gemäß Variante 5 autark gearbeitet werden soll, dann muss immer Energie über den elektrischen Durchlauferhitzer oder den elektrischen Kleinspeicher eingespeist werden, um ein ausreichend erwärmtes Abwasser zu haben. Hierbei kann die investierte Wärme zu etwa 70 % bis 80 % zurück gewonnen werden.

Alle Systeme können über einen elektronischen Regler ausgeführt werden, zum Teil aber auch mechanisch. Die Varianten 1, 2 und 3 können auf ein elektronisch gesteuertes Ventil verzichten und beispielsweise über einen mechanischen Regler betrieben werden, welcher bei Warmwasseranforderung Heißwasser durch einen Wärmetauscher passieren lässt. Ein beispielhafter Regler ist der DE 20 2008 006 054 U1 zu entnehmen.

Die Warmhaltefunktion bei mechanischen Varianten erfolgt im Sommer bevorzugt über ein zeitliches pulsierendes Bypass-Ventil, damit immer bis zur Wohnungsstation Heizungswärme vorgehalten wird und damit immer sofort Energie zur Warmwasserbereitung zur Verfügung steht.

## Patentansprüche

1. Verfahren zum Erwärmen von Trinkwasser und Bereitstellen als Trinkwarmwasser mit einer Trinkwarmwassertemperatur in einer Wohnung,
unter Nutzung eines Primärheizungsvor- und -rücklaufs (1, 14),
wobei Heizungswasser
von einer Zentralheizung über den Primärheizungsvorlauf (1) in einer Primärheizungsvorlauftemperatur zur Wohnung gefördert wird und nach Nutzung in einer kühleren Primärheizungsrücklauftemperatur über den Primärheizungsrücklauf (14) zur Zentralheizung zurückgefördert wird, wobei die Nutzung des Heizungswassers und das Erwärmen des Trinkwassers in einer Wohnungsstation (3) erfolgen, **dadurch gekennzeichnet, dass** in der Wohnungsstation (3) zwei sich ergänzende Erwärmungsstufen unterschiedlichen Prinzips zum Erwärmen des Trinkwassers vorgesehen sind, nämlich eine mittels eines Wasser-Wasser-Wärmetauschers (22) und eine mittels eines elektrischen Nachheizers (19; 32).

2. Verfahren nach Anspruch 1, ***dadurch gekennzeichnet, dass***
als erste Erwärmungsstufe das Trinkwasser im Wasser-Wasser-Wärmetauscher (22) teilerwärmt und
als zweite Erwärmungsstufe sanitärseitig des Wasser-Wasser-Wärmetauschers (22) das teilerwärmte Trinkwasser mittels des elektrischen Nachheizers (19; 32) auf Trinkwarmwassertemperatur resterwärmt wird.

3. Verfahren nach Anspruch 1, ***dadurch gekennzeichnet, dass***
als erste Erwärmungsstufe vom Primärheizungsvorlauf (1) stammendes Heizungswasser mittels des elektrischen Nachheizers (19; 32) nachgeheizt und
als zweite Erwärmungsstufe sanitärseitig des elektrischen Nachheizers (19) das Trinkwasser im Wasser-Wasser-Wärmetauscher (22) mittels des nachgeheizten Heizungswassers auf Trinkwarmwassertemperatur erwärmt wird;

4. Verfahren nach Anspruch 1, ***dadurch gekennzeichnet, dass***
als erste Erwärmungsstufe vom Primärheizungsvorlauf (1) stammendes Heizungswasser mittels des elektrischen Nachheizers nachgeheizt (19; 32) wird und
als zweite Erwärmungsstufe das Trinkwasser sanitärseitig des elektrischen Nachheizers (19) im Wasser-Wasser-Wärmetauscher (22) mittels des nachgeheizten Heizungswassers teilerwärmt wird und als dritte Erwärmungsstufe das teilerwärmte Trinkwasser sanitärseitig des Wasser-Wasser-Wärmetauschers (22) mittels eines weiteren elektrischen Nachheizers (32) auf Trinkwarmwassertemperatur resterwärmt wird.

5. Verfahren nach einem der vorstehenden Ansprüche, ***dadurch gekennzeichnet, dass*** Warmabwasser (36) durch einen Rückgewinnungs-Wärmetauscher (22) geführt wird, um Wärmeenergie aus dem Warmabwasser (36) rückzugewinnen und mit der rückgewonnenen Wärmeenergie zum Erwärmen des Trinkwassers beizutragen.

6. Verfahren nach Anspruch 5, ***dadurch gekennzeichnet, dass*** das Warmabwasser (36) durch den genannten Wasser-Wasser-Wärmetauscher (22) in der Wohnungsstation (3) geführt wird.

7. Verfahren nach einem der vorstehenden Ansprüche, ***dadurch gekennzeichnet, dass*** eine Primärheizungsvorlauftemperatur zwischen 38 °C und maximal 60 °C gehalten wird, insbesondere gleitend.

8. Verfahren nach einem der vorstehenden Ansprüche, ***dadurch gekennzeichnet, dass*** eine Primärheizungsrücklauftemperatur zwischen 25 °C und maximal 45 °C gehalten wird, insbesondere variabel.

9. Verfahren nach einem der vorstehenden Ansprüche, ***dadurch gekennzeichnet, dass*** eine Verbrauchs- und Zustandsgrößenerfassung durchgeführt wird, wobei ermittelte Verbrauchs- und Zustandsgrößen von der Wohnungsstation an eine Steuerung für die Zentralheizung übermittelt werden.

10. Verfahren nach Anspruch 9, ***dadurch gekennzeichnet, dass*** die Zentralheizung anhand der übermittelten Verbrauchs- und Zustandsgrößen gesteuert wird.

11. Verfahren nach einem der vorstehenden Ansprüche, ***dadurch gekennzeichnet, dass*** zum elektrischen Nachheizer (19) modular ein weiterer Nachheizer (22, 32) in die Wohnungsstation (3) geschaltet wird.

12. Verfahren nach einem der vorstehenden Ansprüche, ***dadurch gekennzeichnet, dass*** ein Stellmotor vor einem Regler eingesetzt wird, um auf einen hydraulischen Abgleich Einfluss zu nehmen und nur eine maximal vorgesehene Energiemenge in die Wohnung einspeisen zu lassen.

13. Verfahren zum Erwärmen von Trinkwasser und Bereitstellen als Trinkwarmwasser mit einer Trinkwarmwassertemperatur in einer Wohnung, wobei Warmabwasser (36) unterhalb einer Zapfstelle (39) für Trinkwarmwasser aufgenommen und abgeführt wird,
nach einem der vorstehenden Ansprüche,
***dadurch gekennzeichnet, dass***
zwei sich ergänzende Erwärmungsstufen unterschiedlichen Prinzips zum Erwärmen des Trinkwassers vorgesehen sind, nämlich eine mittels eines Rückgewinn-Wärmetauschers (22) und eine mittels eines elektrischen Nachheizers (19; 32), wobei
als erste Erwärmungsstufe das abgeführte Warmabwasser (36) zur Nutzung durch den Rückgewinnungs-Wärmetauscher (22) geführt wird, um Wärmeenergie aus dem Warmabwasser (36) rückzugewinnen und mit der rückgewonnenen Wärmeenergie das Trinkwasser teilzuerwärmen, und
als zweite Erwärmungsstufe sanitärseitig des Rückgewinnungs-Wärmetauschers (22) das teilerwärmte Trinkwasser mittels des elektrischen Nachheizers (32) auf Trinkwarmwassertemperatur resterwärmt wird;
wobei beide Erwärmungsstufen in einer Wohnungsstation (3) durchgeführt werden können, und/oder
wobei das Warmabwasser (36) insbesondere durch den genannten Wasser-Wasser-Wärmetauscher (22) in der Wohnungsstation (3) geführt werden kann, insbesondere mit Vorzug gegenüber anderweitiger Durchströmung.

14. Haustechniksystem, umfassend mindestens eine Wohnung, mindestens eine Wohnungsstation (3) in welcher die Nutzung von Heizungswasser und die Erwärmung von Trinkwasser erfolgen können, wobei in der Wohnungsstation (3) mit einem Wasser-Wasser-Wärmetauscher (22) und einem elektrischen Nachheizer (19,32) zwei sich ergänzenden Erwärmungsstufen unterschiedlichen Prinzips zur Erwärmung von Trinkwasser vorgesehen sind; wobei das Haustechniksystem eingerichtet zum Durchführen eines Verfahrens nach einem oder mehreren der Ansprüche 1 bis 13 ist, ***dadurch gekennzeichnet, dass*** die Wohnungsstation (3) wohnungsseitig (31) einer Übergabestelle in die Wohnung angeordnet ist.

15. Haustechniksystem, umfassend mindestens eine Wohnung, mindestens eine Wohnungsstation (3) in welcher die Nutzung von Heizungswasser und die Erwärmung von Trinkwasser erfolgen können, wobei in der Wohnungsstation (3) mit einem Wasser-Wasser-Wärmetauscher (22) und einem elektrischen Nachheizer (19,32) zwei sich ergänzenden Erwärmungsstufen unterschiedlichen Prinzips zur Erwärmung von Trinkwasser vorgesehen sind; wobei das Haustechniksystem eingerichtet zum Durchführen eines Verfahrens nach einem oder mehreren der Ansprüche 1 bis 13 ist, ***dadurch gekennzeichnet, dass*** die Wohnungsstation (3) heizungsseitig (30) einer Übergabestelle in die Wohnung angeordnet ist.

16. Haustechniksystem nach Anspruch 14 oder 15, ***dadurch gekennzeichnet, dass*** die Wohnungsstation (3) von einem Gehäuse umgeben ist.

17. Haustechniksystem nach einem der Ansprüche 14 bis 16, ***dadurch gekennzeichnet, dass*** eine lernfähige Steuerung vorgesehen ist.

18. Haustechniksystem nach einem der Ansprüche 14 bis 17, ***dadurch gekennzeichnet, dass*** eine Mehrzahl dezentraler Wohnungsstationen (3) für eine Mehrzahl Wohnungen vorgesehen ist.

19. Wohnungsstation (3) mit einem Gehäuse, einem Wasser-Wasser-Wärmetauscher (22), einem elektrischen Nachheizer (19; 32), einem Regler (11) und Anschlüssen, wobei der Wasser-Wasser-Wärmetauscher (22) und der elektrische Nachheizer (19,32) als zwei sich ergänzenden Erwärmungsstufen unterschiedlichen Prinzips zur Erwärmung von Trinkwasser vorgesehen sind, zum Errichten eines Haustechniksystems nach einem der Ansprüche 14 bis 18.

20. Wohn-, Büro- und/oder Geschäftsgebäude oder Mehrgebäudekomplex mit einem Haustechniksystem nach einem der Ansprüche 14 bis 18 und/oder mit einer Mehrzahl Wohnungsstationen (3) nach Anspruch 19, wobei die Wohnungen einheitlich oder nicht-einheitlich als Wohn-Wohnungen, als Büros oder als Ladengeschäfte eingerichtet sind.

21. Verfahren zum Nachrüsten eines Wohn-, Büro- und/oder Geschäftsgebäudes oder Gebäudekomplexes mit einem Haustechniksystem nach einem der Ansprüche 14 bis 18, ***dadurch gekennzeichnet, dass*** eine bauseits vorhandene Zirkulationsleitung verwendet und umfunktioniert wird.

## Claims

1. Method for heating drinking water and providing it as warm drinking water with a drinking water temperature in a home,
using a primary heating supply and return line (1, 14),
where heating water is conveyed from a central heater to the home at a primary heating flow temperature via the primary heating supply line (1) and is conveyed back to the central heater after use at a cooler primary heating return temperature via the primary heating return line (14), wherein
usage of the heating water and heating of the drinking water take place in a home station (3),
**characterized in that**
in the home station (3), two complementary heating stages with different functioning methods are provided for heating the drinking water, one of which works with a water-water heat exchanger (22) and one with an electric reheater (19; 32).

2. Method according to Claim 1, ***characterized in that***
in a first heating stage, the drinking water is partially heated in the water-water heat exchanger (22) and
in a second heating stage at the sanitary installation end of the water-water heat exchanger (22), heating of the partially heated drinking water is completed up to warm drinking water temperature by means of the electric reheater (19; 32).

3. Method according to Claim 1, ***characterized in that***
in a first heating stage, heating water coming from the primary heating supply line (1) is reheated by means of the electric reheater (19; 32), and
in a second heating stage at the sanitary installation end of the electric reheater (19), the drinking water is heated up to drinking water temperature in the water-water heat exchanger (22) by means of the reheated heating water.

4. Method according to Claim 1, ***characterized in that***
in a first heating stage, heating water coming from the primary heating supply line (1) is reheated by means of the electric reheater (19; 32), and
in a second heating stage at the sanitary installation end of the electric reheater (19), the drinking water is partially heated in the water-water heat exchanger (22) by means of the reheated heating water, and
in a third heating stage, the partially heated drinking water is completely heated up to the warm drinking water temperature at the sanitary installation end of the water-water heat exchanger (22) by means of an additional electric reheater (32).

5. Method according to one of the above Claims, ***characterized in that*** warm waste water (36) is conducted through a recovery heat exchanger (22) for recovering heat energy from the warm waste water (36) and for helping to heat the drinking water with the recovered heat energy.

6. Method according to Claim 5, ***characterized in that*** the warm waste water (36) is conducted through the above-mentioned water-water heat exchanger (22) in the home station (3).

7. Method according to one of the above Claims, ***characterized in that*** a primary heating supply temperature is maintained between 38°C and maximally 60°C, in particular slidingly.

8. Method according to one of the above Claims, ***characterized in that*** a primary heating return temperature is maintained between 25°C and maximally 45°C, in particular variably.

9. Method according to one of the above Claims, ***characterized in that*** a consumption and state variable measurement is performed, with registered consumption and state variables being transferred from the home station to a controller for the central heater.

10. Method according to Claim 9, ***characterized in that*** the central heater is controlled by means of the transferred consumption and state variables.

11. Method according to one of the above Claims, ***characterized in that*** in addition to the electric reheater (19), an additional reheater (22, 32) is switched into the home station (3) in a modular manner.

12. Method according to one of the above Claims, ***characterized in that*** a motor actuator is positioned before a loop controller so as to influence a hydraulic adjustment and allow only a maximum preset amount of energy to be fed to the home.

13. Method for heating drinking water and providing it as warm drinking water with a warm drinking water temperature in a home, where warm waste water (36) is tapped and carried off below a tap connection (39) for warm drinking water,
according to one of the above Claims,
***characterized in that***
two complementary heating stages with different functioning methods are provided for heating the drinking water, one of which works with a recovery heat exchanger (22) and one with an electric reheater (19; 32), where
in a first heating stage, the warm waste water (36) which was carried off is conducted through the recovery heat exchanger (22) for usage so as to recover heat energy from the warm waste water (36) and partially heat the drinking water with the recovered heat energy, and
in a second heating stage at the sanitary installation end of the recovery heat exchanger (22), heating of the partially heated drinking water is completed up to the warm drinking water temperature by means of the electric reheater (32);
where both heating stages can take place in a home station (3), and/or where the warm waste water (36) can be conducted in particular through the above-mentioned water-water heat exchanger (22) in the home station (3), in particular with preference over a different type of passage.

14. Building equipment system, comprising at least one home, at least one home station (3), in which the usage of heating water and the heating of drinking water can take place, where in the home station (3) two complementary heating stages with different functioning methods are provided for heating drinking water, with a water-water heat exchanger (22) and an electric reheater (19, 32); the building equipment system being adapted for performing a method according to one or more of Claims 1 through 13, ***characterized in that*** the home station (3) is arranged at the home end (31) of a transfer point to the home.

15. Building equipment system, comprising at least one home, at least one home station (3), in which the usage of heating water and the heating of drinking water can take place, where in the home station (3) two complementary heating stages with different functioning methods are provided for heating drinking water, with a water-water heat exchanger (22) and an electric reheater (19, 32); the building equipment system being adapted for performing a method according to one or more of Claims 1 through 13, ***characterised in that*** the home station (3) is arranged at the heater end (30) of a transfer point to the home.

16. Building equipment system according to Claim 14 or 15, ***characterized in that*** the home station (3) is surrounded by a housing.

17. Building equipment system according to one of Claims 14 through 16, ***characterized in that*** an adaptive controller is provided.

18. Building equipment system according to one of Claims 14 through 17, ***characterized in that*** a plurality of decentralized home stations (3) for a plurality of homes are provided.

19. Home station (3) with a housing, a water-water heat exchanger (22), an electric reheater (19; 32), a controller (11) and connections, the water-water heat exchanger (22) and the electric reheater (19, 32) being provided as two complementary heating stages with different functioning methods for heating drinking water,
for providing a building equipment system according to one of Claims 14 through 18.

20. Residential building, office building and/or commercial building or multi-building complex with a building equipment system according to one of Claims 14 through 18 and/or with a plurality of home stations (3) according to Claim 19, the homes being furnished homogeneously or heterogeneously as lodgings, offices or shops.

21. Method for retrofitting a residential building, office building and/or commercial building or building complex with a building equipment system according to one of Claims 14 through 18, ***characterized in that*** a circulation line provided by the customer is used and repurposed.

## Revendications

1. Procédé, destiné à la mise en température d'eau potable et à sa mise à disposition sous forme d'eau potable chaude, à une température d'eau potable dans une habitation, en utilisant un circuit aller et retour d'un chauffage primaire (1, 14),
lors duquel de l'eau de chauffage est transportée d'un chauffage central via le circuit aller du chauffage primaire (1) vers l'habitation, à une température de circuit aller du chauffage primaire et après utilisation, est retransportée vers le chauffage central, via le circuit retour du chauffage primaire (14), à une température plus fraîche de circuit retour du chauffage primaire,
sachant que
l'utilisation de l'eau de chauffage et la mise en température de l'eau potable s'effectuent dans un poste domestique (3),
**caractérisé en ce que**
dans le poste domestique (3) deux étapes de mise en température complémentaires, d'un principe différent sont prévues pour la mise en température de l'eau potable, à savoir l'une au moyen d'un échangeur thermique eau/eau (22) et l'une au moyen d'un post-chauffage électrique (19 ; 32).

2. Procédé selon la revendication 1, **caractérisé en ce que**
la première étape de mise en température consiste à chauffer partiellement l'eau potable dans l'échangeur thermique eau/eau (22) et
la deuxième étape de mise en température consiste à chauffer résiduellement, à une température d'eau potable l'eau potable partiellement chauffée, du côté sanitaire de l'échangeur thermique eau/eau (22), au moyen du post-chauffage électrique (19 ; 32).

3. Procédé selon la revendication 1, **caractérisé en ce que**
la première étape de mise en température consiste à post-chauffer de l'eau de chauffage provenant du circuit aller du chauffage primaire (1), au moyen du post-chauffage électrique (19 ; 32) et
la deuxième étape de mise en température consiste à chauffer l'eau potable à température d'eau potable, du côté sanitaire du post-chauffage électrique (19) dans l'échangeur thermique eau/eau (22), au moyen de l'eau de chauffage post-chauffée.

4. Procédé selon la revendication 1, **caractérisé en ce que**
la première étape de mise en température consiste à post-chauffer de l'eau de chauffage provenant du circuit aller du chauffage primaire (1), au moyen du post-chauffage électrique (19 ; 32) et
la deuxième étape de mise en température consiste à chauffer partiellement l'eau potable, du côté sanitaire du post-chauffage électrique (19) dans l'échangeur thermique eau/eau (22), au moyen de l'eau de chauffage post-chauffée et
la troisième étape de mise en température consiste à chauffer résiduellement, à une température d'eau potable l'eau potable partiellement chauffée, du côté sanitaire de l'échangeur thermique eau/eau (22), au moyen du post-chauffage électrique (32).

5. Procédé selon l'une quelconque des revendications précédentes, **caractérisé en ce que** de l'eau usée chaude (36) est conduite à travers un échangeur thermique de recyclage (22) pour recycler de l'énergie thermique à partir de l'eau usée chaude (36) et pour contribuer, à l'aide de l'énergie thermique recyclée à la mise en température de l'eau potable.

6. Procédé selon la revendication 5, **caractérisé en ce que** l'eau usée chaude (36) est conduite à travers l'échangeur thermique eau/eau (22) cité dans le poste domestique (3).

7. Procédé selon l'une quelconque des revendications précédentes, **caractérisé en ce qu'**une température de circuit aller du chauffage primaire est maintenue entre 38 °C et un maximum de 60 °C, notamment de manière flexible.

8. Procédé selon l'une quelconque des revendications précédentes, **caractérisé en ce qu'**une température de circuit retour du chauffage primaire est maintenue entre 25 °C et un maximum de 45 °C, notamment de manière variable.

9. Procédé selon l'une quelconque des revendications précédentes, **caractérisé en ce qu'**il est procédé à une détection de grandeurs de consommation et d'état, des grandeurs de consommation et d'état déterminées étant transmises par le poste domestique à un système de commande du chauffage central.

10. Procédé selon la revendication 9, **caractérisé en ce que** le chauffage central est commandé à l'aide des grandeurs de consommation et d'état transmises.

11. Procédé selon l'une quelconque des revendications précédentes, **caractérisé en ce qu'**en sus du post-chauffage électrique (19), on fait intervenir de manière modulaire un post-chauffage supplémentaire (22, 32) dans le poste domestique (3).

12. Procédé selon l'une quelconque des revendications précédentes, **caractérisé en ce qu'**un régulateur utilise un servomoteur pour influencer une compensation hydraulique et pour ne permettre l'alimentation dans l'habitation que d'une quantité maximale prévue d'énergie.

13. Procédé, destiné à la mise en température d'eau potable et à sa mise à disposition sous forme d'eau potable chaude, à une température d'eau potable dans une habitation, lors duquel de l'eau usée chaude (36) est soutirée sous un point de prise (39) d'eau potable chaude et évacuée,
selon l'une quelconque des revendications précédentes,
**caractérisé en ce que**
deux étapes de mise en température complémentaires, d'un principe différent sont prévues pour la mise en température de l'eau potable, à savoir l'une au moyen d'un échangeur thermique de recyclage (22) et l'une au moyen d'un post-chauffage électrique (19 ; 32).
la première étape de mise en température consistant à conduire l'eau usée chaude (36) évacuée pour son utilisation à travers l'échangeur thermique de recyclage (22), pour recycler de l'énergie thermique à partir de l'eau usée chaude (36) et à chauffer partiellement l'eau potable à l'aide de l'énergie thermique recyclée, et
la deuxième étape de mise en température consistant, du côté sanitaire de l'échangeur thermique de recyclage (22), à chauffer résiduellement à température d'eau potable l'eau potable partiellement chauffée au moyen du post-chauffage électrique (32) ;
sachant que les deux étapes de mise en température peuvent être réalisées dans un poste domestique (3) et/ou
l'eau usée chaude (36) peut être conduite notamment à travers l'échangeur thermique eau/eau (22) cité dans le poste domestique (3), notamment avec une priorité par rapport à un autre écoulement.

14. Système domotique, comprenant au moins une habitation, au moins un poste domestique (3) dans lequel peuvent s'effectuer l'utilisation de l'eau de chauffage et la mise en température d'eau potable, lors duquel, dans le poste domestique (3), à l'aide d'un échangeur thermique eau/eau (22) et d'un post-chauffage électrique (19, 32), deux étapes de mise en température complémentaires, d'un principe différent sont prévues pour la mise en température d'eau potable ; sachant que le système domotique est aménagé pour réaliser un procédé selon l'une quelconque ou plusieurs des revendications 1 à 13, **caractérisé en ce que** le poste domestique (3) est placé du côté habitation (31) d'une station de transfert dans l'habitation.

15. Système domotique, comprenant au moins une habitation, au moins un poste domestique (3) dans lequel peuvent s'effectuer l'utilisation de l'eau de chauffage et la mise en température d'eau potable, lors duquel, dans le poste domestique (3), à l'aide d'un échangeur thermique eau/eau (22) et d'un post-chauffage électrique (19, 32), deux étapes de mise en température complémentaires, d'un principe différent sont prévues pour la mise en température d'eau potable ; sachant que le système domotique est aménagé pour réaliser un procédé selon l'une quelconque ou plusieurs des revendications 1 à 13, **caractérisé en ce que** le poste domestique (3) est placé du côté chauffage (30) d'une station de transfert dans l'habitation.

16. Système domotique selon la revendication 14 ou 15, **caractérisé en ce que** le poste domestique (3) est entouré d'un boîtier.

17. Système domotique selon l'une quelconque des revendications 14 à 16, **caractérisé en ce qu'**il est prévu un système de commande intelligent.

18. Système domotique selon l'une quelconque des revendications 14 à 17, **caractérisé en ce qu'**une pluralité de postes domestiques (3) décentralisés sont prévus pour une pluralité d'habitations.

19. Poste domestique (3) doté d'un boîtier, d'un échangeur thermique eau/eau (22), d'un post-chauffage électrique (19 ; 32), d'un régulateur (11) et de raccordements, l'échangeur thermique eau/eau (22) et le post-chauffage électrique (19, 32) étant prévus sous la forme de deux étapes de mise en température complémentaires, d'un principe différent pour la mise en température d'eau potable, pour créer un système domotique selon l'une quelconque des revendications 14 à 18.

20. Immeuble d'habitation, administratif et/ou commercial ou complexe de plusieurs immeubles, doté d'un système domotique selon l'une quelconque des revendications 14 à 18 et/ou d'une pluralité de postes domestiques (3) selon la revendication 19, les habitations étant aménagée de manière homogène ou non homogène à vocation de logements, de bureaux ou de commerces.

21. Procédé, destiné à rééquiper un immeuble d'habitation, administratif et/ou commercial ou un complexe de plusieurs immeubles avec un système domotique selon l'une quelconque des revendications 14 à 18, **caractérisé en ce qu'**on utilise ou on transforme une conduite de circulation déjà présente dans le bâtiment.
